# EUROPEAN PATENT SPECIFICATION

(11) **EP 0 674 681 B1**
(45) Date of publication and mention of the grant of the patent: **22.04.1998**
(21) Application number: 94903847.5
(22) Date of filing: 14.12.1993
(51) Int. Cl.: C08K 5/13

(54) **REFINED PETROLEUM WAX COMPOSITION**
AUF RAFFINIERTEM ERDÖLWACHS BASIERENDE ZUSAMMENSETZUNG
COMPOSITION DE CIRE DE PETROLE RAFFINEE

(30) Priority: 16.12.1992 EP 92311491
(43) Date of publication of application: 04.10.1995
(73) Proprietor: SHELL INTERNATIONALE RESEARCH MAATSCHAPPIJ B.V., 2596 HR Den Haag (NL)
(72) Inventor: ROYALL, Sven, Edward, Waterloo, London SE1 7NA (GB); VAN DER VEER, Wijtze, NL-1031 CM Amsterdam (NL); VAN DER VENNET, Renee, Theresa, Houston, TX 77002 (US); COX, Michael, Joseph, Houston, TX 77002 (US); STONE, April, Carolyn, Houston, TX 77002 (US)
(86) International application number: EP9303630
(87) International publication number: WO9413736

(56) References cited:
- EP-A- 0 359 488
- EP-A- 0 459 354
- DE-A- 1 114 319
- GB-A- 2 135 672
- US-A- 2 619 465
- DATABASE WPI Week 7831, Derwent Publications Ltd., London, GB; AN 55811A 'ETHYLENE BASED POLYMER COMPOSITIONS' & JP,A,53 072 057 (NIPPON PETROCHEM) 27 June 1978

## Description

The present invention relates to a petroleum wax composition, in particular to a petroleum wax composition comprising a stabilising agent.

Refined petroleum waxes are valuable products finding use in such applications as candles, paper coatings, foodstuffs and protective sealants for foodstuffs, adhesive compositions, polishes and electrical insulation. The waxes are mixtures of hydrocarbons having high molecular weights and are solid at ambient conditions of temperature and pressure.

The refined petroleum waxes are most preferably obtained as white, translucent, odourless materials. However, it has been found that, upon exposure to oxygen, for example by contact with air, petroleum waxes degrade, resulting in the waxes becoming coloured and odorous. Accordingly, it is common practice to add to the finished waxes a stabilising agent.

Thus, US patent number 4,766,166 (US-A-4,766,166) discloses a wax composition comprising a synthetic wax, such as a Fischer-Tropsch wax, in combination with a high molecular weight polyethylene material. It is disclosed in US-A-4,766,166 that, in addition to the synthetic wax and the polyethylene components, the composition may contain other ingredients including antioxidants. Butylated hydroxy toluene (BHT) is given as a specific example of an antioxidant.

US patent number 4,471,086 (US-A-4,471,086) is directed to an adhesive composition comprising a Fischer-Tropsch hydrocarbon wax, which composition may contain one or more antioxidants. Effective antioxidants disclosed in US-A-4,471,086 are tris(di-t-butyl-p-hydroxybenzyl)-trimethyl benzene, alkylated bisphenol, zinc dibutyl dithiocarbamate 4,4-methylene bis(2,6-di-tert-butylphenol), tetrakis[methylene(3,5-di-tert-butyl-4-hydroxyhydrocinamate)methane], lauryl stearyl thiodipropionate, dilauryl 3,3-thiodipropionate and 2,6-di-tert-butyl-p-cresol (BHT).

Recently, however, there has been a growing desire to reduce the use of compounds such as BHT as antioxidants in wax compositions, in particular when used in food or food-related applications. Accordingly, there is a need for compounds which are effective as antioxidants in petroleum wax compositions and which offer alternatives to compounds such as BHT. Tocopherol (commonly referred to as vitamin E) is a naturally occurring product present in many foodstuffs. Surprisingly, it has been found that tocopherol and derivatives thereof, when included in compositions of petroleum wax, are very effective as antioxidants.

Tocopherol is known to be effective as an antioxidant when used in certain products. Thus, the texts of European Patent applications published under the numbers EP-A-0 459 354 and EP-A-0 464 491 disclose lubricating base oil compositions comprising liquid paraffins and fatty acids. The compositions may comprise one or more dibutylhydroxytoluenes, for example BHT, and/or tocopherol as antioxidants. Lubricating base oil compositions comprising tocopherol as an antioxidant are disclosed in Japanese patent applications published under the numbers J5 4099-104 and J5 6053-188.

A raw oil for use in formulating hydraulic fluids is disclosed in International Patent application publication number WO 91/02784, which oil comprises a refined rapeseed and/or soya oil, selected esters, selected monocarboxylic acids and/or fatty acids, and an antioxidant selected from the group methoxyphenol, ethoxyphenol, butylhydroxyanisol, butylhydroxytoluene, methoxyhydroquinone, ethoxyhydroquinone, tert-butylhydroquinone and/or tocopherol.

Further, German patent numbers DE 1114319 and DE 1136102 disclose polyolefin compositions, in particular polyethylene and polypropylene compositions, comprising tocopherol and a naturally occurring carboxylic acid.

Finally, Shmulovich et al., Kinetika i Kataliz, Vol. 19, No. 2, pp. 501 to 503, March-April, 1978, describe tests conducted in the performance of tocopherol, ionol, beta-naphthol and butylhydroxyanisole as antioxidants for liquid petrolatum (medicinal vaseline oil).

Surprisingly, it has been found that refined petroleum wax compositions comprising tocopherol and/or a derivative thereof exhibit a very high resistance to oxidation. This results in the wax composition retaining a high quality of colour and remaining substantially odourless for extensive periods of time. More surprisingly, it has been found that refined petroleum wax compositions comprising a refined petroleum wax and tocopherol as an antioxidant exhibit a substantially greater resistance to oxidation than similar compositions comprising equivalent amounts of conventionally applied antioxidants, for example BHT.

Accordingly, the present invention provides a refined petroleum wax composition comprising a refined petroleum wax on an oil-free basis in an amount of at least 90 %wt (based upon the total weight of the composition) and, as a stabilising agent, tocopherol and/or a derivative thereof.

Tocopherol and its derivatives are well known, naturally occurring compounds. For details of the structure of the compounds reference is made to the Dictionary of Organic Compounds, Fifth, Edition, published by Chapman and Hall. As used herein, the term "tocopherol" is a reference to one or a mixture of the tocopherols, including α-tocopherol (5,7,8-trimethyltocol), β-tocopherol (5,8-dimethyltocol), γ-tocopherol (7,8-dimethyltocol), n-tocopherol (7-methyltocol) and Γ-tocopherol (5,7-dimethyltocol). The term "derivative" when used in association with the tocopherols is a reference to any derivative of tocopherol in which a stearically hindered hydroxyl group on the aromatic ring of the molecule is present. Examples of derivatives include the tocotrienols.
Preferably the composition comprises a tocopherol, with α-tocopherol being particularly preferred. Tocopherol and derivatives thereof may exist in a variety of isomeric forms. Tocopherol and/or derivatives thereof may be present in the composition in either one or a mixture of isomeric forms.

The tocopherols and their derivatives are available commercially, for example from the Sigma Chemical Company Ltd., United Kingdom.

Tocopherol and/or a derivative thereof is present in the composition in an amount sufficient to be effective in preventing oxidation of the wax. Typically, the composition comprises tocopherol and/or a derivative thereof in an amount of up to 5% wt, more preferably up to 1% wt. Most surprisingly, it has been found that tocopherol and/or its derivatives may be present in the composition in only very small amounts and yet still be effective as an antioxidant. Thus, the composition may comprise tocopherol and/or a derivative thereof in an amount of up to 200 ppm, more preferably up to 100 ppm, especially up to 50 ppm. It has been found that tocopherol and/or a derivative thereof present in an amount of up to 15 ppm is very effective as an antioxidant for petroleum wax compositions.

The present invention relates to refined petroleum wax compositions. For the purposes of this specification, the term "petroleum wax" is a reference to both paraffin waxes and microcrystalline waxes as well as to Fischer-Tropsch waxes and other synthetic waxes having similar properties. Synthetic waxes, such as the high pressure and low pressure polyethylene waxes,
characterised by, for example, very high melt viscosities, are not suitable for inclusion in the compositions of the present invention. Typical melt viscosities for the refined petroleum waxes are in the range of up to 15 cSt.

The refined petroleum waxes for inclusion in the composition are to be distinguished from the unrefined waxes, such as slack waxes, scale waxes and petrolatum, and the liquid petroleum waxes. The unrefined waxes and liquid petroleum waxes may be characterised by their high oil content, the oil content of these materials being above 5% wt, and typically much higher, for example between 10 and 20% wt. The oil content of the wax may be determined using ASTM method D 721.

For a general discussion of refined petroleum waxes, reference is made to Ullmanns Encyklopädie der technischen Chemie, 4th Edition, Volume 24.

Paraffin waxes are petroleum waxes consisting principally of alkanes. They are macrocrystalline, brittle solids, typically comprising from about to 40 to 90% wt normal alkanes, the remainder being isoalkanes and cycloalkanes. Paraffin waxes have a low affinity for oil, the oil content being typically less than 2% wt, more typically less then 1% wt. Paraffin waxes are obtained from the conventional refining of crude oil and are typically recovered from a distillate by solvent extraction. Paraffin waxes suitable for inclusion in the compositions of the present invention include the crude hard waxes and raw waxes, as well as the semi-refined, filtered and fully-refined waxes. Preferred paraffin waxes for inclusion in the composition are the semi-refined, filtered and fully-refined waxes, especially the fully-refined waxes.

Microcrystalline waxes are petroleum waxes containing substantial quantities of hydrocarbons other than normal alkanes. The oil content of the microcrystalline waxes is higher than that of the paraffin waxes, typically 1 to 5% wt. Microcrystalline waxes are produced during the conventional refining of crude oil and are typically recovered from the residual fraction of crude oil distillation. Suitable microcrystalline waxes for inclusion in the composition include the plastic microwaxes and the hard microwaxes.

The refined petroleum wax composition may also comprise a synthetic wax. For the purposes of this specification, references to a synthetic wax are references to a Fischer-Tropsch wax or waxes having similar properties. Fischer-Tropsch waxes may be produced from a mixture of carbon monoxide and hydrogen (often referred to as synthesis gas) by the Fischer-Tropsch synthesis. Suitable processes for producing the Fischer-Tropsch waxes are well known in the art.

In the Fischer-Tropsch synthesis, a mixture of carbon monoxide and hydrogen is contacted at elevated temperature and pressure with a suitable catalyst. Catalysts for use in the Fischer-Tropsch synthesis process frequently comprise, as the catalytically active component, a metal from Group VIII of the Periodic Table of the Elements. Particular catalytically active metals include ruthenium, iron, cobalt and nickel. Especially preferred waxes for inclusion in the composition of the present invention are those prepared by a Fischer-Tropsch synthesis process employing a catalyst comprising cobalt as the catalytically active component.

The catalytically active metal is preferably supported on a porous carrier. The porous carrier may be selected from any of the suitable refractory metal oxides or silicates or combinations thereof known in the art. Particular examples of preferred porous carriers include silica, alumina, titania and mixtures thereof.

If desired, the catalyst may also comprise one or more metals or metal oxides as promoters. Suitable metal oxide promoters may be selected from Groups IIA, IIIB, IVB, VB and VIB of the Periodic Table of the Elements. Preferred metal oxide promoters are oxides of the metals of Group IVB, in particular titanium and zirconium. Suitable metal promoters may be selected from Groups VIIB and VIII of the Periodic Table. Platinum and palladium are especially preferred metal promoters.

Examples of suitable catalysts for preparing waxes by the Fischer-Tropsch synthesis are disclosed in European patent applications publication numbers EP-A-0 104 672, EP-A-0 110 449, EP-A-0 127 220, EP-A-0 167 215, EP-A-0 180 269 and EP-A-0 221 598.

The Fischer-Tropsch synthesis is typically conducted at a temperature of from about 125 to about 350 °C, preferably from about 175 to 250 °C. Typical operating pressures for the synthesis are in the range of from about 5 bar to about 100 bar, more preferably from about 10 to about 50 bar. During the process, the catalyst is typically contacted with a gaseous mixture comprising hydrogen and carbon monoxide in a ratio of less than 2.5,
preferably less than 1.75. More preferably, the hydrogen to carbon monoxide ratio of the mixture is in the range of from 0.4 to 1.5, especially from 0.9 to 1.3.

Waxes produced in the Fischer-Tropsch synthesis are present substantially in the liquid phase under the conditions prevailing in the process. However, the effluent from the process comprises, in addition to the desired waxes, unconverted feed gas and lighter gaseous and liquid components produced during the synthesis reactions. The waxes may be separated from the unconverted feed gas and lighter components by conventional separation techniques well known in the art, for example distillation.

The waxes, once separated from the lighter components may then, if desired, be further refined to yield one or more wax fractions. Refining techniques for the waxes are known in the art. Owing to the low thermal stability of the waxes, high temperatures should be avoided. Accordingly, separation techniques such as vacuum distillation should be applied using, for example, the fine vacuum or short-path evaporators known in the art. Typical evaporating equipment for use in refining the waxes include the high vacuum falling film evaporators and the high vacuum wiped film evaporators. Typical operating pressures for the aforementioned evaporators range from 10⁻¹ to 10² Pa.

Fischer-Tropsch waxes consist almost entirely of paraffins and typically comprise at least 70% wt normal paraffins, more preferably greater than 80% wt normal paraffins. Fischer-Tropsch waxes comprising more than 90% wt normal paraffins are very suitable for use in the compositions of the present invention. The oil content of the Fischer-Tropsch waxes is typically less than 5% wt, more typically less than 3% wt. Fischer-Tropsch waxes having an oil content of less than 1% wt are especially suitable for inclusion in the compositions of the present invention.

At the very least, the compositions of the present invention consist of a refined petroleum wax and tocopherol and/or a derivative thereof. The composition may, however, comprise one or more other additives or stabilisers, if required. The composition comprises the refined petroleum wax (on an oil-free basis) in an amount of at least 90% wt, more preferably at least 95% wt, the remaining portion of the composition comprising any oil present in the wax, tocopherol and any further additives or stabilisers which may be present.

In a second aspect, the present invention is directed to the use of tocopherol and/or a derivative thereof as a stabiliser for a refined petroleum wax.

The tocopherol and/or derivative thereof to be included in the petroleum wax composition may be added to the refined petroleum wax after final processing. Accordingly, in a further aspect, the present invention is directed to a process for preparing a petroleum wax composition, comprising adding to a refined petroleum wax tocopherol and/or a derivative thereof. The tocopherol and/or derivative thereof is conveniently added to the refined petroleum wax with the wax in the molten state. The resulting refined petroleum wax composition may be allowed to solidify or, alternatively, for ease of handling and transport may be maintained as a liquid.

The compositions of the present invention may be used in any of the applications of conventional refined wax compositions. Examples of which have been given in the introduction hereto. The compositions of the present invention are particularly suitable for use in food or food-related applications.

The present invention will be further explained by way of the following, illustrative examples.

### Example 1

A refined Fischer-Tropsch wax was prepared using the following general procedure:

A cobalt/zirconium/silica catalyst was prepared following the procedure described in European Patent Application publication No. 0 428 223. The catalyst was loaded into a reaction vessel and reduced by contacting the catalyst with a mixture of hydrogen and nitrogen at a temperature of 250 °C, a pressure of 5 bar and a gas hourly space velocity of from 500 to 600 Nl/l/h. The activated catalyst was then contacted with a mixture of carbon monoxide and hydrogen having a hydrogen/carbon monoxide ratio of 1.1 at a gas inlet pressure of from 37 to 39 bar, a temperature of from 210 to 220 °C and a gas hourly space velocity of from 1110 to 1130 Nl/l/h to yield a hydrocarbon product.

The hydrocarbon product was subjected to a conventional distillation to remove the C₁₇- components, leaving a C₁₈+ hydrocarbon mixture. The C₁₈+ hydrocarbon mixture thus produced was fed to a vertical wiped film evaporator of the SAMVAC type, operated to yield a C₂₇- light fraction and a C₂₈+ heavy fraction. The heavy fraction was fed to a second SAMVAC vertical wiped film evaporator, operated to yield a C₄₀- light fraction and a C₄₁+ heavy fraction. The C₄₀- fraction, having the properties set out in Table 1 below, was retained for further testing.

**Table 1**

| Refined Fischer-Tropsch Wax | | |
|---|---|---|
| Carbon Distribution | | |
| <C₂₂ | (% wt) | 0.17 |
| <C₂₈ | (% wt) | 5.8 |
| C₂₈ to C₄₀ | (% wt) | 90.9 |
| <C₄₀ | (% wt) | 3.3 |
| Oil Content (% wt) | | 0.6 |
| Congealing Point (°C) | | 68.3 |
| Viscosity (mm²/s at 100 °C) | | 5.24 |

Two samples of the refined Fischer-Tropsch wax were heated to form a liquid and were blended with α-tocopherol in a concentration of 15 ppm and 50 ppm respectively. The resulting compositions were stored in an atmosphere of air at a constant temperature of 80 °C. At regular periods, the odour of the two samples was determined according to the method set out in ASTM D 1833. For comparative purposes, the odour of a third sample of the refined wax stored under the identical conditions but without the presence of an antioxidant, was also determined. The results of the storage test are set out in Table 2 below.

**Table 2**

| Refined Fischer-Tropsch Wax Storage Tests | | | | |
|---|---|---|---|---|
| | | ODOUR (rating 0 - 4; ASTM D 1833) | | |
| | α-tocopherol (ppm) | 15 | 50 | zero |
| Storage Time (weeks) | | | | |
| 1 | | 0.5 | 0.5 | 1.0 |
| 2 | | 0.5 | 0.5 | 1.5 |
| 3 | | 0.5 | 0.5 | 1.5 |
| 5 | | 0.5 | 0.5 | 2.5 |
| 12 | | 1.0 | 0.5 | 3.0 |

Using the same test procedure as outlined above, a further three compositions comprising the refined Fischer-Tropsch wax were tested for stability during storage under air at 80 °C. At regular intervals, the concentration of aldehydes/ketones, acids/anhydrides and esters accumulated in the wax was determined using Fourier Transform Infrared Spectroscopy at 120 °C in dry air, measuring absorption in the -OH band over a range of 3600 to 3500 cm⁻¹ and the -O band over a range of from 1850 to 1650 cm⁻¹. At the same time, the peroxide number of the wax was determined using the Technical Association of the Pulp and Paper Industry (TAPPI) peroxide number method T-659 (ASTM D 1832-87). The concentrations of these various oxygen-containing compounds is an indicator of the degree of oxidation of the composition. The results, in terms of the quantities of oxygen moieties detected, are given in Table 3 below.

### Example 2

A crude-derived petroleum wax (commercially available after bauxite percolation and stabilisation as SHELLWAX 200 (trademark)) was prepared by solvent dewaxing and deoiling a high viscosity index lubricating base oil obtained by the conventional refining of crude oil. The wax had a viscosity at 100 °C of 4.2 cSt, an oil content of 0.1% wt, a melting point of 61 °C and a specific gravity, at 15 °C of 0.917.

To a first sample of the wax was added α-tocopherol to a concentration of 15 ppm. To a second sample of the wax was added butylated hydroxytoluene (BHT, commercially available under the trademark IONOL) to a concentration of 15 ppm. For comparative purposes, a third sample was prepared without additives. The three compositions were maintained at a constant temperature of about 93 °C (200 °F) under an atmosphere of air. In order to measure the rate of oxidation of the wax, the peroxide number of the three samples was monitored using the Technical Association of the Pulp and Paper Industry (TAPPI) peroxide number method T-659 (ASTM D 1832-87). All the samples had an initial peroxide number of zero. The time taken for each sample to develop a significant peroxide number is given in Table 4 below.

**Table 3**

| Refined Fischer-Tropsch Wax Storage Tests | | | | | |
|---|---|---|---|---|---|
| | | | OXYGENATES | | |
| | α-tocopherol | Peroxides | Aldehydes/ Ketones | Acids/ Anhydrides | Esters |
| | (ppm) | (meq/1000g) | (ppm) | (ppm) | (ppm) |
| Storage Time (weeks) | | | | | |
| 0 | 0 | 3 | <5 | <5 | <5 |
| | 15 | <1 | <5 | <5 | <5 |
| | 50 | <1 | <5 | <5 | <5 |
| 1 | 0 | 12 | 10 | <5 | <5 |
| | 15 | <1 | <5 | <5 | <5 |
| | 50 | <1 | <5 | <5 | <5 |
| 2 | 0 | 19 | 10 | <5 | <5 |
| | 15 | <1 | <5 | <5 | <5 |
| | 50 | <1 | <5 | <5 | <5 |
| 3 | 0 | 40 | 25 | 15 | <5 |
| | 15 | <1 | <5 | <5 | <5 |
| | 50 | <1 | <5 | <5 | <5 |
| 5 | 0 | 68 | 75 | 40 | <5 |
| | 15 | <1 | <5 | <5 | <5 |
| | 50 | <1 | <5 | <5 | <5 |
| 12 | 0 | 230 | 430 | 120 | 30 |
| | 15 | <1 | <5 | <5 | <5 |
| | 50 | <1 | <5 | <5 | <5 |

**Table 4**

| Crude-derived Petroleum Wax Storage Tests | | | |
|---|---|---|---|
| Sample No. | Additive | Additive (ppm) | Time taken to develop peroxide no. (days) |
| 1 | α-tocopherol | 15 | 35 |
| 2 | BHT | 15 | 16 |
| 3 | none | - | 1 |

## Claims

1. A refined petroleum wax composition comprising a refined petroleum wax on an oil-free basis in an amount of at least 90 %wt, based upon the total weight of the composition, and, as a stabilising agent, tocopherol and/or a derivative thereof.

2. A composition according to claim 1, characterised in that the tocopherol is α-tocopherol, β-tocopherol, γ-tocopherol, n-tocopherol or Γ-tocopherol, preferably α-tocopherol.

3. A composition according to either of claims 1 or 2, characterised in that the composition comprises tocopherol and/or a derivative thereof in an amount of up to 5 %wt.

4. A composition according to any preceding claim, characterised in that the refined petroleum wax is a paraffin wax.

5. A composition according to any one of claims 1 to 3, characterised in that the refined petroleum wax is a microcrystalline wax.

6. A composition according to any one of claims 1 to 3, characterised in that the refined petroleum wax is a synthetic wax.

7. A composition according to claim 6, characterized in that the refined petroleum wax is a Fischer-Tropsch wax.

8. A composition according to claim 7, characterised in that the refined petroleum wax is a Fischer-Tropsch wax, the said Fischer-Tropsch wax having a normal-paraffin content of at least 70 %wt.

9. A composition according to any preceding claim, charactecised in that the composition comprises the refined petroleum wax, on an oil-free basis in an amount of at least 95 %wt.

10. A method for preparing a composition as claimed in any preceding claim, comprising adding to a refined petroleum wax tocopherol and/or a derivative thereof.

11. The use of tocopherol and/or a derivative thereof as a stabiliser for a refined petroleum wax.

## Patentansprüche

1. Raffinierte Erdölwachszusammensetzung, umfassend ein raffiniertes Erdölwachs, auf ölfreier Basis in einer Menge von wenigstens 90 Gew.-%, bezogen auf das Gesamtgewicht der Zusammensetzung, und, als Stabilisierungsmittel, Tocopherol und/oder ein Derivat hievon.

2. Zusammensetzung nach Anspruch 1, dadurch gekennzeichnet, daß das Tocopherol α-Tocopherol, β-Tocopherol, γ-Tocopherol, n-Tocopherol oder Γ-Tocopherol, vorzugsweise α-Tocopherol, ist.

3. Zusammensetzung nach einem der Ansprüche 1 oder 2, dadurch gekennzeichnet, daß die Zusammensetzung Tocopherol und/oder ein Derivat hievon in einer Menge von bis zu 5 Gew.-% umfaßt.

4. Zusammensetzung nach einem der vorstehenden Ansprüche, dadurch gekennzeichnet, daß das raffinierte Erdölwachs ein Paraffinwachs ist.

5. Zusammensetzung nach einem der Ansprüche 1 bis 3, dadurch gekennzeichnet, daß das raffinierte Erdölwachs eine mikrokristallines Wachs ist.

6. Zusammensetzung nach einem der Ansprüche 1 bis 3, dadurch gekennzeichnet, daß das raffinierte Erdölwachs ein synthetisches Wachs ist.

7. Zusammensetzung nach Anspruch 6, dadurch gekennzeichnet, daß das raffninierte Erdölwachs ein Fischer-Tropsch-Wachs ist.

8. Zusammensetzung nach Anspruch 7, dadurch gekennzeichnet, daß das raffinierte Erdölwachs ein Fischer-Tropsch-Wachs ist, wobei das Fischer-Tropsch-Wachs einen Normalparaffinigehalt von wenigstens 70 Gew.-% aufweist.

9. Zusammensetzung nach einem der vorstehenden Ansprüche, dadurch gekennzeichnet, daß die Zusammensetzung das raffinierte Erdölwachs auf ölfreier Basis in einer Menge von wenigstens 95 Gew.-% umfaßt.

10. Verfahren zur Herstellung einer Zusammensetzung nach einem der vorstehenden Ansprüche, umfassend ein Zusetzen von Tocopherol und/oder eines Derivats hievon zu einem raffinierten Erdölwachs.

11. Verwendung von Tocopherol und/oder eines Derivats hievon als Stabilisator für ein raffiniertes Erölwachs.

## Revendications

1. Composition de cire de pétrole raffinée comprenant une cire de pétrole raffinée sur une base sans huile ou dépourvue d'huile en une proportion d'au moins 90% en poids, sur base du poids total de la composition et, à titre d'agent stabilisateur, du tocophérol et/ou un dérivé de celui-ci.

2. Composition suivant la revendication 1, caractérisée en ce que le tocophérol est l'un des composés qui suivent: α-tocophérol, β-tocophérol, γ-tocophérol, n-tocophérol et Γ-tocophérol, de préférence l'α-tocophérol.

3. Composition suivant l'une quelconque des revendications 1 et 2, caractérisée en ce qu'elle comprend du tocophérol et/ou un dérivé de celui-ci en une proportion s'élevant jusqu'à 5% en poids.

4. Composition suivant l'une quelconque des revendications précédentes, caractérisée en ce que la cire de pétrole raffinée est une cire de paraffine.

5. Composition suivant l'une quelconque des revendications 1 à 3, caractérisée en ce que la cire de pétrole raffinée est une cire microcristalline.

6. Composition suivant l'une quelconque des revendications 1 à 3, caractérisée en ce que la cire de pétrole raffinée est une cire synthétique.

7. Composition suivant la revendication 6, caractérisée en ce que la cire de pétrole raffinée est une cire de Fischer-Tropsch.

8. Composition suivant la revendication 7, caractérisée en ce que la cire de pétrole raffinée est une cire de Fischer-Tropsch, ladite cire de Fischer-Tropsch possédant une teneur en paraffines normales d'au moins 70% en poids.

9. Composition suivant l'une quelconque des revendications précédentes, caractérisée en ce qu'elle comprend la cire de pétrole raffinée, sur une base sans huile ou dépourvue d'huile en une proportion d'au moins 95% en poids.

10. Procédé de préparation d'une composition suivant l'une quelconque des revendications précédentes, caractérisé en ce que l'on ajoute du tocophérol et/ou un dérivé de celui-ci à une cire de pétrole raffinée.

11. Utilisation du tocophérol et/ou d'un dérivé de celui-ci à titre de stabilisateur pour une cire de pétrole raffinée.
